# FASCICULE DE BREVET EUROPEEN

(11) **EP 3 574 256 B1**
(45) Date de publication et mention de la délivrance du brevet: **25.11.2020**
(21) Numéro de dépôt: 18706407.6
(22) Date de dépôt: 30.01.2018
(51) Int. Cl.: F21V 8/00

(54) **GUIDE DE LUMIÈRE ET ENSEMBLE OPTIQUE COMPRENANT UN TEL GUIDE DE LUMIÈRE**
LICHTLEITER UND OPTISCHE ANORDNUNG MIT EINEM DERARTIGEN LICHTLEITER
LIGHT GUIDE AND OPTICAL ASSEMBLY COMPRISING SUCH A LIGHT GUIDE

(30) Priorité: 30.01.2017 FR 1750718
(43) Date de publication de la demande: 04.12.2019
(73) Titulaire: Valeo Comfort and Driving Assistance, 94046 Créteil Cedex (FR)
(72) Inventeur: BOMBARD, Stéphane, 94046 Créteil Cedex (FR); THORAILLER, Maryline, 94046 Créteil Cedex (FR)
(74) Mandataire: Delplanque, Arnaud
(86) Numéro de dépôt international: PCT/EP2018/052300
(87) Numéro de publication internationale: WO 2018/138380

(56) Documents cités:
- CN-A- 101 761 829
- US-A1- 2007 274 100
- US-A1- 2015 023 056

## Description

### DOMAINE TECHNIQUE AUQUEL SE RAPPORTE L'INVENTION

La présente invention concerne les guides de lumière fournissant un éclairage d'ambiance, par exemple dans un véhicule automobile.

Elle concerne plus particulièrement un guide de lumière et un ensemble optique comprenant un tel guide de lumière.

L'invention s'applique particulièrement avantageusement dans le cas où l'on souhaite proposer une surface éclairée, de couleur variable et à moindre coût, par exemple dans l'habitacle d'un véhicule.

### ARRIERE-PLAN TECHNOLOGIQUE

On connaît des éclairages d'ambiance comprenant un guide de lumière dont une surface d'entrée est éclairée par une source de lumière et dont la face de sortie forme ainsi une surface éclairée visible par l'utilisateur.

On souhaite parfois (pour des motifs fonctionnels ou esthétiques) que la surface éclairée puisse prendre plusieurs couleurs distinctes, par exemple rouge, jaune et verte.

On peut utiliser pour ce faire une source lumineuse de couleur réglable, par exemple une source multicolore à base de diodes électroluminescente (généralement dénommée sous le terme "*LED RGB*" pour "*Light Emitting Diode Red Green Blue*")*.*

Cette solution est toutefois couteuse et n'est donc pas adaptée lorsque l'on souhaite obtenir une surface éclairée de couleur variable à moindre coût. Le document CN101761829 divulgue un guide d'onde connu.

### OBJET DE L'INVENTION

Dans ce contexte, la présente invention propose un guide de lumière présentant une face de sortie et une face d'entrée allongée comportant une première partie allongée et une seconde partie allongée juxtaposées selon la largeur de la face d'entrée, le guide de lumière comportant, au droit de ladite première partie, un premier élément optique et un second élément optique, et, au droit de ladite seconde partie, un troisième élément optique et un quatrième élément optique, le premier élément optique jouxtant le quatrième élément optique dans la largeur de la face d'entrée allongée, le second élément optique jouxtant le troisième élément optique dans la largeur de la face d'entrée allongée, le premier élément optique étant conçu pour réfléchir, en direction au moins dudit second élément optique, un premier flux lumineux reçu de la face d'entrée, et le second élément optique étant conçu pour transmettre en direction de la face de sortie un second flux lumineux reçu sur la face d'entrée et pour réfléchir en direction de la face de sortie le premier flux lumineux réfléchi par ledit premier élément optique, le troisième élément optique étant conçu pour réfléchir, en direction au moins dudit quatrième élément optique, un troisième flux lumineux reçu de la face d'entrée, et le quatrième élément optique étant conçu pour transmettre, en direction de la face de sortie, un quatrième flux lumineux reçu sur la face d'entrée et pour réfléchir, en direction de la face de sortie, le troisième flux lumineux réfléchi par ledit troisième élément optique.

Un tel guide de lumière est ainsi adapté à être éclairé d'une première couleur au niveau des premier et quatrième éléments optiques, et d'une seconde couleur au niveau des second et troisième éléments optiques.

Du fait de la construction du guide de lumière, lors de l'éclairement par la première couleur, le second élément optique (par réflexion) et le quatrième élément optique (par réfraction) transmettront de la lumière vers la face de sortie, ce qui permet d'illuminer la face de sortie au droit de l'ensemble de ces éléments optiques.

De même, lors de l'éclairement par la seconde couleur, le second élément optique (par réfraction) et le quatrième élément optique (par réflexion) transmettront de la lumière vers la face de sortie, ce qui permet d'illuminer la face de sortie au droit de l'ensemble de ces éléments optiques.

En outre, en utilisant simultanément l'éclairement par la première couleur et l'éclairement par la seconde couleur, on obtient sur la face de sortie (au droit de l'ensemble des éléments optiques) une troisième couleur formée par composition additive des première et seconde couleurs.

Selon d'autres caractéristiques envisageables à titre optionnel (et donc non limitatif) :
- la face de sortie a une surface inférieure à la face d'entrée ;
- le second élément optique et le quatrième élément optique sont conçus pour éclairer, sur toute la largeur de la face de sortie, respectivement une première région et une seconde région juxtaposées selon la longueur de la face de sortie ;
- le premier élément optique comprend un évidement formé dans le guide de lumière à distance de la face d'entrée et présentant une face inclinée par rapport à la face d'entrée ;

- le second élément optique comprend un évidement formé dans la face d'entrée et présentant une face orientée vers le premier élément optique ;
- le troisième élément optique comprend un évidement formé dans le guide de lumière à distance de la face d'entrée et présentant une face inclinée par rapport à la face d'entrée ;
- le quatrième élément optique comprend un évidement formé dans la face d'entrée et présentant une face orientée vers le troisième élément optique ;
- ladite première partie comprend une alternance de premiers éléments optiques et de seconds éléments optiques ;
- ladite seconde partie comprend une alternance de troisièmes éléments optiques et de quatrièmes éléments optiques ;
- chaque premier élément optique jouxte un desdits quatrièmes éléments optiques dans la largeur de la face d'entrée ;
- chaque second élément optique jouxte un desdits troisièmes éléments optiques dans la largeur de la face d'entrée ;
- le guide de lumière est réalisé dans au moins deux matières distinctes : le guide de lumière est par exemple bi-matière (le guide de lumière pouvant être réalisé dans un matériau transparent dans une partie portant notamment la face d'entrée et/ou dans un matériau diffusant dans une autre partie portant notamment la face de sortie).

L'invention propose également un ensemble optique comprenant un guide de lumière tel que mentionné ci-dessus, une première source de lumière agencée pour éclairer ledit premier élément optique et le quatrième élément optique, et une seconde source de lumière agencée pour éclairer ledit second élément optique et le troisième élément optique.

La première source de lumière présente par exemple une longueur d'onde caractéristique comprise entre 600 nm et 700 nm ; la seconde source de lumière peut quant à elle par exemple présenter une longueur d'onde caractéristique comprise entre 450 nm et 550 nm.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente en perspective un guide de lumière selon l'invention ;
- la figure 2 est une vue de dessus d'un ensemble optique comprenant le guide de lumière de la figure 1 ;
- la figure 3 est une vue de côté de l'ensemble optique de la figure 2 ;
- la figure 4 est une vue de dessous de l'ensemble optique de la figure 2 ;
- la figure 5 est une vue de face de l'ensemble optique de la figure 2 ;
- la figure 6 représente une première variante de réalisation du guide de lumière ; et
- la figure 7 représente une seconde variante de réalisation du guide de lumière.

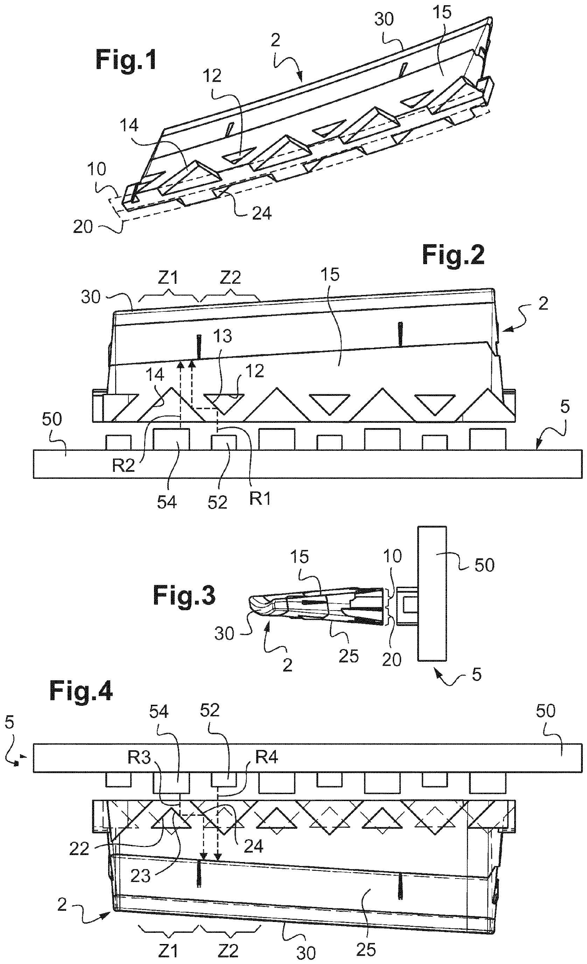

On a représenté sur les figures 2 à 4 un ensemble optique comprenant un guide de lumière 2 (également visible en figure 1) et une plaque d'éclairage 5.

Le guide de lumière 2, réalisé ici sous la forme d'un barreau allongé ou jonc, comprend une face d'entrée allongée et une face de sortie 30.

Comme bien visible sur la figure 3, la surface de la face de sortie 30 est inférieure à la surface de la face d'entrée. Le guide de lumière 2 a en effet ici une forme générale en pointe vers la face de sortie 30 de sorte que la surface en section du guide de lumière 2 diminue continument entre la face d'entrée et la face de sortie 30.

La face d'entrée allongée comporte une première partie allongée 10 (en haut sur les figures 1 et 3) et une seconde partie allongée 20 (en bas sur les figures 1 et 3) juxtaposées selon la largeur de la face d'entrée.

Le guide de lumière 2 comprend donc une première face principale 15 reliant (selon la direction de propagation de la lumière comme expliqué plus loin) la première partie allongée 10 et la face de sortie 30, et une seconde face principale 25 reliant (également selon la direction de propagation de la lumière) la seconde face allongée 20 et la face de sortie 30.

Le guide de lumière 2 est réalisé dans une ou plusieurs matières translucides. Dans l'exemple décrit ici, comme bien visible sur les figures, le guide de lumière 2 est bi-matière : le guide de lumière 2 est réalisé dans un matériau transparent dans une partie portant notamment la face d'entrée et dans un matériau diffusant dans une autre partie portant notamment la face de sortie 30.

La plaque d'éclairage 5 porte, sur un support 50, une alternance de premières sources de lumière 52 et de secondes sources de lumière 54.

Les premières sources de lumière 52 sont par exemple des sources monochromes d'une première couleur. Les premières sources de lumière 52 présentent ici une longueur d'onde caractéristique comprise entre 600 nm et 700 nm et sont donc de couleur rouge. En pratique, les premières sources de lumière 52 sont par exemple des diodes électroluminescentes.

Les secondes sources de lumière 54 sont par exemple des sources monochromes d'une seconde couleur. Les secondes sources de lumière 54 présentent ici une longueur d'onde caractéristique comprise entre 450 nm et 550 nm et sont donc de couleur verte. En pratique, les secondes sources de lumière 54 sont par exemple des diodes électroluminescentes.

Comme bien visible sur les figures 1 et 2, le guide de lumière 2 comporte, au niveau de la première partie 10 de sa face d'entrée, une alternance de premiers éléments optiques 12 et de seconds éléments optiques 14.

Les premiers éléments optiques 12 sont chacun formés par un évidement de la première face principale 15 du guide de lumière 2 ; cet évidement est situé à distance de la face d'entrée et présente une face inclinée 13 par rapport à la face d'entrée. Cette face inclinée 13 est orientée (i.e. la normale à cette face inclinée 13 est dirigée) vers un second élément optique 14 voisin du premier élément optique 12 concerné.

Dans le mode de réalisation décrit ici, les premiers éléments optiques 12 sont chacun formés par un évidement triangulaire dont un premier côté est parallèle à la face d'entrée, dont un second côté forme une face inclinée 13 telle que décrite ci-dessus orientée vers un second élément optique 14 voisin, et dont un troisième côté forme une autre face inclinée telle que décrite ci-dessus orientée vers l'autre second élément optique voisin.

Les seconds éléments optiques 14 sont chacun formés par un évidement de la face d'entrée (au niveau de sa première partie 10) et présentent une face orientée vers le premier élément optique 12 voisin.

Dans l'exemple décrit ici, les seconds éléments optiques 14 comprennent deux faces respectivement orientées vers les deux premiers éléments optiques 12 voisins.

Précisément, la face inclinée 13 de chaque premier élément optique 12 et la face susmentionnée du second élément optique 14 sont chacune orientées à 45° par rapport à la face d'entrée (et sont donc parallèles entre elles).

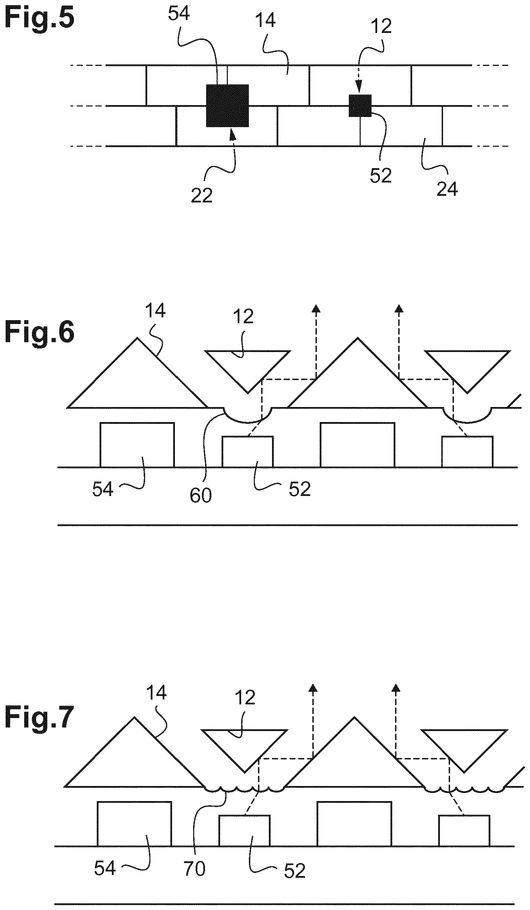

Comme bien visible sur les figures 2 et 5, les premières sources de lumière 52 sont respectivement situées au droit des premiers éléments optiques 12 ; chaque première source de lumière 52 est ainsi agencée pour éclairer un desdits premiers éléments optiques 12. Les secondes sources de lumière 54 sont quant à elles respectivement situées au droit des seconds éléments optiques 14 ; chaque seconde source de lumière 54 est ainsi agencée pour éclairer un desdits seconds éléments optiques 14.

Comme illustré en figure 2, grâce à la configuration des premiers et seconds éléments optiques 12, 14 présentée ci-dessus, chaque premier élément optique 12 réfléchit, en direction d'au moins un second élément optique 14 (ici en direction de deux seconds éléments optiques), un premier flux lumineux R1 reçu d'une première source lumineuse 52 à travers la face d'entrée ; le second élément optique 14 permet quant à lui de transmettre en direction de la face de sortie 30 un second flux lumineux R2 reçu d'une seconde source lumineuse 54 sur la face d'entrée et de réfléchir en direction de la face de sortie 30 le premier flux lumineux R1 susmentionné (après réflexion sur le premier élément optique 12).

Comme bien visible sur la figure 4, le guide de lumière 2 comporte, au niveau de la seconde partie 20 de sa face d'entrée, une alternance de troisièmes éléments optiques 22 et de quatrièmes éléments optiques 24.

Les troisièmes éléments optiques 22 sont chacun formés par un évidement de la seconde face principale 25 du guide de lumière 2 ; cet évidement est situé à distance de la face d'entrée et présente une face inclinée 23 par rapport à la face d'entrée. Cette face inclinée 23 est orientée vers un quatrième élément optique 24 voisin du troisième élément optique 22 concerné.

Dans le mode de réalisation décrit ici, les troisièmes éléments optiques 22 sont chacun formés par un évidement triangulaire dont un premier côté est parallèle à la face d'entrée, dont un second côté forme une face inclinée 23 telle que décrite ci-dessus orientée vers un quatrième élément optique 24 voisin, et dont un troisième côté forme une autre face inclinée telle que décrite ci-dessus orientée vers l'autre quatrième élément optique voisin.

Les quatrièmes éléments optiques 24 sont chacun formés par un évidement de la face d'entrée (au niveau de sa seconde partie 20) et présentent une face orientée vers le troisième élément optique 22 voisin.

Dans l'exemple décrit ici, les quatrièmes éléments optiques 24 comprennent deux faces respectivement orientées vers les deux troisièmes éléments optiques 22 voisins.

Précisément, la face inclinée 23 de chaque troisième élément optique 22 et la face susmentionnée du quatrième élément optique 24 sont chacune orientées à 45° par rapport à la face d'entrée (et sont donc parallèles entre elles).

Comme visible sur la figure 1, sur la figure 4 (où les premiers éléments optiques 12 et les seconds éléments optiques 14 sont représentés en pointillés) et sur la figure 5, chaque premier élément optique 12 jouxte un quatrième élément optique 24 dans la largeur de la face d'entrée allongée ; de même, chaque second élément optique 14 jouxte un troisième élément optique 22 dans la largeur de la face d'entrée allongée.

Ainsi, comme bien visible en figure 5, chaque première source de lumière 52 est respectivement située au droit d'un quatrième élément optique 24 et éclaire donc ce quatrième élément optique 24. De même, chaque seconde source de lumière 54 est située au droit d'un troisième élément optique 22 et éclaire ce troisième élément optique 22.

Comme illustré en figure 4, grâce à la configuration des troisièmes et quatrièmes éléments optiques 22, 24 présentée ci-dessus, chaque troisième élément optique 22 réfléchit, en direction d'au moins un quatrième élément optique 24 (ici en direction de deux tels quatrièmes éléments optiques), un troisième flux lumineux R3 reçu de la seconde source de lumière 54 concernée à travers la face d'entrée ; le quatrième élément optique 24 transmet quant à lui, en direction de la face de sortie 30, un quatrième flux lumineux R4 reçu de la première source lumineuse concernée 52 sur la face d'entrée et réfléchit, en direction de la face de sortie 30, le troisième flux lumineux R3 précité (après réflexion par le troisième élément optique 22).

Du fait que le guide de lumière 2 a une forme en pointe vers la face de sortie 30, le second élément optique 14 (bien que situé seulement au droit de la première partie 10 de la face d'entrée) éclaire la face de sortie 30 sur toute sa largeur. Précisément, le second élément optique 14 éclaire principalement une première région Z1 de la face de sortie 30 sur toute la largeur de la face de sortie 30. (On remarque qu'en pratique, les rayons lumineux passant par le second élément optique 14 peuvent pour partie atteindre des régions de la face de sortie 30 autres que la première région Z1, en particulier du fait de la présence de la partie en matériau diffusant déjà mentionnée.)

De même, le quatrième élément optique 24 (bien que située seulement au droit de la seconde partie 20 de la face d'entrée) éclaire la face de sortie 30 sur toute sa largeur. Précisément, le quatrième élément optique 24 éclaire principalement une seconde région Z2 de la face de sortie 30 sur toute la largeur de la face de sortie 30 (la première région et la seconde région étant juxtaposées selon la longueur de la face de sortie 30). (Ici également, les rayons lumineux passant par le quatrième élément optique 24 peuvent pour partie atteindre en pratique des régions de la face de sortie 30 autres que la seconde région Z2, en particulier du fait de la présence de la partie en matériau diffusant déjà mentionnée.)

Lorsque les premières sources de lumière 52 sont allumées (les secondes sources de lumière 54 étant éteintes), les seconds éléments optiques 14 transmettent vers la face de sortie 30 la lumière ayant la première couleur (ici rouge) produite par les premières sources de lumière 52, réfléchie par les premiers éléments optiques 12, puis réfléchie par le second élément optique 14 concerné lui-même ; les quatrièmes éléments optiques 24 transmettent quant à eux par réfraction vers la face de sortie 30 la lumière ayant la première couleur (ici rouge) produite par les premières sources de lumière 52.

Les seconds et quatrièmes éléments optiques 14, 24 couvrant (alternativement) toute la longueur du guide optique 2, on obtient une illumination (de couleur rouge) homogène de la face de sortie 30 sur toute sa longueur (l'homogénéité étant encore améliorée grâce à la présence de la partie en matériau diffusant au niveau de la face de sortie 30).

Lorsque les secondes sources de lumière 54 sont allumées (les premières sources de lumière 52 étant éteintes), les quatrièmes éléments optiques 24 transmettent vers la face de sortie 30 la lumière ayant la seconde couleur (ici verte) produite par les secondes sources de lumière 54, réfléchie par les troisièmes éléments optiques 22, puis réfléchie par le quatrième élément optique 24 concerné lui-même ; les seconds éléments optiques 14 transmettent quant à eux par réfraction vers la face de sortie 30 la lumière ayant la seconde couleur (ici verte) produite par les secondes sources de lumière 54.

On obtient ainsi une illumination (de couleur verte) homogène de la face de sortie 30 sur toute sa longueur (l'homogénéité étant encore améliorée grâce à la présence de la partie en matériau diffusant au niveau de la face de sortie 30)

Lorsque les premières sources de lumière 52 et les secondes sources de lumière 54 sont allumées, on obtient sur toute la longueur de la face de sortie 30 une illumination homogène d'une troisième couleur (ici jaune) formée par composition additive des première et seconde couleurs.

Selon des variantes possibles de réalisation du guide de lumière, la face d'entrée peut comporter des éléments optiques additionnels, au niveau en particulier des premiers éléments optiques 12 et/ou des troisièmes éléments optiques 22.

Ces éléments optiques additionnels peuvent être par exemple des lentilles 60 (figure 6), ou des mini-lentilles 70 (figure 7), permettant de collimater le faisceau lumineux reçu de la source 52, 54 concernée en direction du premier ou troisième élément optique 12, 22 concerné.

## Revendications

1. Guide de lumière (2) présentant une face de sortie (30) et une face d'entrée allongée comportant une première partie allongée (10) et une seconde partie allongée (20) juxtaposées selon la largeur de la face d'entrée,
le guide de lumière comportant, au droit de ladite première partie (10), un premier élément optique (12) et un second élément optique (14), et, au droit de ladite seconde partie (20), un troisième élément optique (22) et un quatrième élément optique (24),
le premier élément optique (12) jouxtant le quatrième élément optique (24) dans la largeur de la face d'entrée allongée, le second élément optique (14) jouxtant le troisième élément optique (22) dans la largeur de la face d'entrée allongée,
le premier élément optique (12) étant conçu pour réfléchir, en direction au moins dudit second élément optique (14), un premier flux lumineux (R1) reçu de la face d'entrée, et le second élément optique (14) étant conçu pour transmettre en direction de la face de sortie (30) un second flux lumineux (R2) reçu sur la face d'entrée et pour réfléchir en direction de la face de sortie (30) le premier flux lumineux (R1) réfléchi par ledit premier élément optique (12),
le troisième élément optique (22) étant conçu pour réfléchir, en direction au moins dudit quatrième élément optique (24), un troisième flux lumineux (R3) reçu de la face d'entrée, et le quatrième élément optique (24) étant conçu pour transmettre, en direction de la face de sortie (30), un quatrième flux lumineux (R4) reçu sur la face d'entrée et pour réfléchir, en direction de la face de sortie (30), le troisième flux lumineux (R3) réfléchi par ledit troisième élément optique (22).

2. Guide de lumière selon la revendication 1, dans lequel la face de sortie (30) a une surface inférieure à la face d'entrée.

3. Guide de lumière selon l'une quelconque des revendications 1 ou 2, dans lequel le second élément optique (14) et le quatrième élément optique (24) sont conçus pour éclairer, sur toute la largeur de la face de sortie (30), respectivement une première région (Z1) et une seconde région (Z2) juxtaposées selon la longueur de la face de sortie (30).

4. Guide de lumière selon l'une quelconque des revendications 1 à 3, dans lequel le premier élément optique (12) comprend un évidement formé dans le guide de lumière (2) à distance de la face d'entrée et présentant une face inclinée (13) par rapport à la face d'entrée.

5. Guide de lumière selon l'une quelconque des revendications 1 à 4, dans lequel le second élément optique (14) comprend un évidement formé dans la face d'entrée et présentant une face orientée vers le premier élément optique (12).

6. Guide de lumière selon l'une quelconque des revendications 1 à 5, dans lequel ladite première partie (10) comprend une alternance de premiers éléments optiques (12) et de seconds éléments optiques (14) et dans lequel ladite seconde partie (20) comprend une alternance de troisièmes éléments optiques (22) et de quatrièmes éléments optiques (24).

7. Guide de lumière selon la revendication 6, dans lequel chaque premier élément optique (12) jouxte un desdits quatrièmes éléments optiques (24) dans la largeur de la face d'entrée et dans lequel chaque second élément optique (14) jouxte un desdits troisièmes éléments optiques (22) dans la largeur de la face d'entrée.

8. Guide de lumière selon l'une quelconque des revendications 1 à 7, réalisé dans au moins deux matières distinctes.

9. Ensemble optique comprenant un guide de lumière selon l'une quelconque des revendications 1 à 8, une première source de lumière (52) agencée pour éclairer ledit premier élément optique (12) et le quatrième élément optique (24), et une seconde source de lumière (54) agencée pour éclairer ledit second élément optique (14) et le troisième élément optique (22).

10. Ensemble optique selon la revendication 9, dans lequel la première source de lumière (52) présente une longueur d'onde caractéristique comprise entre 600 nm et 700 nm.

11. Ensemble optique selon l'une quelconque des revendications 9 ou 10, dans lequel la seconde source de lumière (54) présente une longueur d'onde caractéristique comprise entre 450 nm et 550 nm.

## Patentansprüche

1. Lichtleiter (2), der eine Ausgangsseite (30) und eine längliche Eingangsseite aufweist, die einen ersten länglichen Teil (10) und einen zweiten länglichen Teil (20) aufweist, die gemäß der Breite der Eingangsseite nebeneinander angeordnet sind,
wobei der Lichtleiter gegenüber dem ersten Teil (10) ein erstes optisches Element (12) und ein zweites optisches Element (14) und gegenüber dem zweiten Teil (20) ein drittes optisches Element (22) und ein viertes optisches Element (24) aufweist,
wobei das erste optische Element (12) in der Breite der länglichen Eingangsseite an das vierte optische Element (24) angrenzt, das zweite optische Element (14) in der Breite der länglichen Eingangsseite an das dritte optische Element (22) angrenzt,
wobei das erste optische Element (12) konzipiert ist, um einen von der Eingangsseite empfangenen ersten Lichtfluss (R1) mindestens in Richtung des zweiten optischen Elements (14) zu reflektieren, und das zweite optische Element (14) konzipiert ist, um einen an der Eingangsseite empfangenen zweiten Lichtfluss (R2) in Richtung der Ausgangsseite (30) zu übertragen und um den vom ersten optischen Element (12) reflektierten ersten Lichtfluss (R1) in Richtung der Ausgangsseite (30) zu reflektieren,
wobei das dritte optische Element (22) konzipiert ist, um einen von der Eingangsseite empfangenen dritten Lichtfluss (R3) in Richtung mindestens des vierten optischen Elements (24) zu reflektieren, und das vierte optische Element (24) konzipiert ist, um einen an der Eingangsseite empfangenen vierten Lichtfluss (R4) in Richtung der Ausgangsseite (30) zu übertragen und um den vom dritten optische Element (22) reflektierten dritten Lichtfluss (R3) in Richtung der Ausgangsseite (30) zu reflektieren.

2. Lichtleiter nach Anspruch 1, wobei die Ausgangsseite (30) eine Fläche kleiner als die Eingangsseite hat.

3. Lichtleiter nach einem der Ansprüche 1 oder 2, wobei das zweite optische Element (14) und das vierte optische Element (24) konzipiert sind, um über die ganze Breite der Ausgangsseite (30) einen ersten Bereich (Z1) bzw. einen zweiten Bereich (Z2) zu beleuchten, die gemäß der Länge der Ausgangsseite (30) aneinandergrenzen.

4. Lichtleiter nach einem der Ansprüche 1 bis 3, wobei das erste optische Element (12) eine Aussparung enthält, die im Lichtleiter (2) in Abstand zur Eingangsseite geformt ist und eine bezüglich der Eingangsseite geneigte Seite (13) aufweist.

5. Lichtleiter nach einem der Ansprüche 1 bis 4, wobei das zweite optische Element (14) eine Aussparung enthält, die in der Eingangsseite geformt ist und eine zum ersten optischen Element (12) ausgerichtete Seite aufweist.

6. Lichtleiter nach einem der Ansprüche 1 bis 5, wobei der erste Teil (10) eine Wechselfolge erster optischer Elemente (12) und zweiter optischer Elemente (14) enthält, und wobei der zweite Teil (20) eine Wechselfolge dritter optischer Elemente (22) und vierter optischer Elemente (24) enthält.

7. Lichtleiter nach Anspruch 6, wobei jedes erste optische Element (12) in der Breite der Eingangsseite an eines der vierten optischen Elemente (24) angrenzt, und wobei jedes zweite optische Element (14) in der Breite der Eingangsseite an eines der dritten optischen Elemente (22) angrenzt.

8. Lichtleiter nach einem der Ansprüche 1 bis 7, der aus mindestens zwei unterschiedlichen Materialien hergestellt ist.

9. Optische Einheit, die einen Lichtleiter nach einem der Ansprüche 1 bis 8, eine erste Lichtquelle (52), die eingerichtet ist, um das erste optische Element (12) und das vierte optische Element (24) zu beleuchten, und eine zweite Lichtquelle (54) enthält, die eingerichtet ist, um das zweite optische Element (14) und das dritte optische Element (22) zu beleuchten.

10. Optische Einheit nach Anspruch 9, wobei die erste Lichtquelle (52) eine charakteristische Wellenlänge zwischen 600 nm und 700 nm aufweist.

11. Optische Einheit nach einem der Ansprüche 9 oder 10, wobei die zweite Lichtquelle (54) eine charakteristische Wellenlänge zwischen 450 nm und 550 nm aufweist.

## Claims

1. Light guide (2) having an exit face (30) and an elongate entrance face comprising a first elongate portion (10) and a second elongate portion (20) that are juxtaposed across the width of the entrance face,
the light guide comprising, in line with said first portion (10), a first optical element (12) and a second optical element (14), and, in line with said second portion (20), a third optical element (22) and a fourth optical element (24),
the first optical element (12) adjoining the fourth optical element (24) in the width of the elongate entrance face, the second optical element (14) adjoining the third optical element (22) in the width of the elongate entrance face,
the first optical element (12) being designed to reflect, in the direction at least of said second optical element (14), a first light flux (R1) received from the entrance face, and the second optical element (14) being designed to transmit in the direction of the exit face (30) a second light flux (R2) received from the entrance face and to reflect in the direction of the exit face (30) the first light flux (R1) reflected by said first optical element (12),
the third optical element (22) being designed to reflect, in the direction at least of said fourth optical element (24), a third light flux (R3) received from the entrance face, and the fourth optical element (24) being designed to transmit, in the direction of the exit face (30), a fourth light flux (R4) received from the entrance face and to reflect, in the direction of the exit face (30), the third light flux (R3) reflected by said third optical element (22).

2. Light guide according to Claim 1, wherein the exit face (30) has a smaller area than the entrance face.

3. Light guide according to either one of Claims 1 and 2, wherein the second optical element (14) and the fourth optical element (24) are designed to illuminate, over the entire width of the exit face (30), a first region (Z1) and a second region (Z2) that are juxtaposed along the length of the exit face (30), respectively.

4. Light guide according to any one of Claims 1 to 3, wherein the first optical element (12) comprises a void that is formed in the light guide (2) at a distance from the entrance face and that has a face (13) that is inclined with respect to the entrance face.

5. Light guide according to any one of Claims 1 to 4, wherein the second optical element (14) comprises a void that is formed in the entrance face and that has a face that is oriented toward the first optical element (12).

6. Light guide according to any one of Claims 1 to 5, wherein said first portion (10) comprises an alternation of first optical elements (12) and of second optical elements (14) and wherein said second portion (20) comprises an alternation of third optical elements (22) and of fourth optical elements (24).

7. Light guide according to Claim 6, wherein each first optical element (12) adjoins one of said fourth optical elements (24) in the width of the entrance face and wherein each second optical element (14) adjoins one of said third optical elements (22) in the width of the entrance face.

8. Light guide according to any one of Claims 1 to 7, made from at least two different materials.

9. Optical assembly comprising a light guide according to any one of Claims 1 to 8, a first light source (52) arranged to illuminate said first optical element (12) and the fourth optical element (24), and a second light source (54) arranged to illuminate said second optical element (14) and the third optical element (22).

10. Optical assembly according to Claim 9, wherein the first light source (52) has a characteristic wavelength comprised between 600 nm and 700 nm.

11. Optical assembly according to either one of Claims 9 and 10, wherein the second light source (54) has a characteristic wavelength comprised between 450 nm and 550 nm.
